# EUROPEAN PATENT SPECIFICATION

(11) **EP 3 200 968 B1**
(45) Date of publication and mention of the grant of the patent: **12.02.2020**
(21) Application number: 15797406.4
(22) Date of filing: 01.10.2015
(51) Int. Cl.: B29C 49/48, B29C 49/56, B29C 49/06, B29C 49/36

(54) **MOLDING DEVICE FOR THERMOPLASTIC MATERIAL CONTAINERS**
FORMVORRICHTUNG FÜR BEHÄLTER AUS THERMOPLASTISCHEM MATERIAL
DISPOSITIF DE MOULAGE POUR RÉCIPIENTS EN MATIÈRE THERMOPLASTIQUE

(30) Priority: 01.10.2014 IT RM20140559
(43) Date of publication of application: 09.08.2017
(73) Proprietor: S.I.P.A. Società Industrializzazione Progettazione e Automazione S.p.A., 31029 Vittorio Veneto (IT)
(72) Inventor: CAVALLINI, Franco, I-31100 Treviso (IT); EUSEBIONE, Ernesto, I-31010 Mareno Di Piave (IT); ZOPPAS, Matteo, I-31015 Conegliano (IT)
(74) Representative: Celona, Antonio
(86) International application number: PCT/IB2015/057520
(87) International publication number: WO 2016/051373

(56) References cited:
- EP-A2- 2 135 726
- US-A1- 2009 220 630
- US-A1- 2013 115 326

## Description

### FIELD OF THE INVENTION

The present invention relates to a device for opening and closing a blowing mold of thermoplastic material containers, such as for example PET bottles, on a rotary blowing machine.

### STATE OF THE ART

Blowing or stretch blowing molds used to manufacture containers starting from a preheated preform made of thermoplastic material generally consist of three parts due to the particular shape, generally concave, of the base of containers produced nowadays. Therefore, molds are generally realized as formed by two side half-molds which shape the body of the container, and by a mold bottom for shaping the bottom of the container. Therefore, the lower areas of the two half-molds and the upper part of the mold bottom are equipped with complementary-shaped fixing means, which are mutually insertable in each other when the mold is in the closed position, in order to ensure the axial rigidity of the mold in closed position in the presence of blowing pressure, which generally reaches 40 bar when PET containers are being molded. The two side half-molds are configured to move with respect to each other between an open position and a closed position, under the action of electrically controlled actuator means or by means of cams. The same actuator means are also prepared to control the cyclical opening and closing of the mold bottom. Solutions are particularly common providing the opening and closing of the two half-molds and of the mold bottom by means of cams. The maximum angle αmax that is to be formed when the maximum opening of the two side half-molds is reached is usually strictly associated with the maximum dimensions of the cross section of the containers to be extracted from the two half-molds after the molding. This therefore affects the kinematic motion and the geometry of the profile of the cams.

It is possible to obtain high-speed productions with current blowing machines, also around 50,000 bottles per hour. From this it can therefore be understood how an important aspect of the blowing process is the speed of the preform loading step and of the extraction step of the finished product from the mold. Therefore, it is apparent that the modes for opening and closing the parts forming the mold are a decisive aspect in order to optimize the speed of the production cycle of a blowing machine. To date, the standard configuration of a similar plant provides the symmetrical or asymmetrical opening of the side half-molds in synchronous mode. This in essence means that the two half-molds are opened simultaneously during the rotary cycle according to an equal or different angle for each half-mold with respect to the perpendicular axis of the mold. However, considering that this occurs both in the step of loading the preforms and in the step of extracting the finished product, this solution does not provide an optimal cycle for opening and closing the mold, thus reducing the efficiency of the production cycle.

EP 2 135 726 describes a mold in which the half-molds open in an entirely independent manner from each other, each being controlled by a respective cam follower. Disadvantageously, each cam follower follows a separate cam track, thus involving both an increased cost for making the machine and machine adjustment times which are too lengthy and making such adjustment rather complicated. Furthermore, the mechanism for opening and closing the mold disadvantageously requires significant forces, thus negatively affecting the machine operating costs.

Thus, the need is felt to overcome the aforesaid drawbacks.

### SUMMARY OF THE INVENTION

It is an object of the present invention to resolve the above drawbacks and to provide a rotary blowing machine with one or more blowing molds which have an opening and closing device that reduces the mechanical forces required for the cyclical opening and closing of the mold.

It is another object of the present invention to provide a blowing machine which is more affordable to make and in which the adjustment of the machine can be performed in a simpler and quicker manner.

It is a further object of the invention to provide a blowing mold with a device for opening and closing the mold which allows further increasing the rotation speed of the blowing machine on which it is mounted, and therefore optimizing the productivity of the container blowing plant.

It is a further object of the present invention to make a rotary blowing machine which incorporates at least one blowing mold, due to which both the step of unloading the finished containers and the step of loading the new preform are simplified.

At least one of the preceding objectives is achieved by a rotary blowing machine for thermoplastic material containers, adapted to rotate about a rotation axis Z, which, according to claim 1, comprises a plurality of blowing molds, each having a first half-mold defined front half-mold in the sense of rotation of the blowing machine, a second half-mold defined rear half-mold in the sense of rotation of the blowing machine, the first and the second half-molds being closable as a book around a hinge axis A lying on a symmetry plane S of the mold coinciding with a radial plane passing through the rotation axis Z, each blowing mold comprising
at least one first cam track,
an opening and closing mechanism to allow the extraction of blown containers and the insertion of preforms to be blown, having
- a first shaft pivoting around an axis D, B' thereof, parallel to the hinge axis A,
- at least one first crank and at least one second crank integrally fixed to the first shaft, the at least one second crank having an end to which a first cam follower is fixed,
- a second shaft pivoting around an axis E, C' thereof, parallel to the hinge axis A,
- at least one third crank and at least one fourth crank integrally fixed to the second shaft, the at least one fourth crank having an end to which a second cam follower is fixed,
- at least one first connecting rod hinged at a first end thereof to the front half-mold and constrained with a second end thereof to the first shaft,
- at least one second connecting rod hinged at a first end thereof to the rear half-mold and constrained with a second end thereof to the second shaft,
wherein the first cam follower and the second cam follower are adapted to follow said at least one first cam track, at predetermined distance from each other so as to control the opening and the closing of the first and second half-molds in subsequent times during the same blowing cycle.

Preferably, there is provided a single first cam track, and the first cam follower and the second cam follower are adapted to follow the same first cam track. This feature provides a machine that is more affordable to make because the number of cam tracks to be made is reduced. Furthermore, the adjustment of the machine is performed in a simpler and quicker manner, since adjustments are to be made only considering a single cam track. The above objectives are reached, according to another particular aspect of the invention, by a cyclic opening and closing method of a blowing mold, mounted on a blowing machine with the above features, in which the first cam follower relative to the front half-mold is the first to reach the stretch of the first cam track which determines the opening of the front half-mold, while the second cam follower relative to the rear half-mold follows the motion of the first cam follower on the same first cam track, and makes the rear half-mold perform the same opening trajectory followed by the front half-mold with a delay defined by the relative distance between the first cam follower and the second cam follower,.

The half-mold located on the left side of the mold, that is in front position considering the sense of rotation of the blowing machine, is the first to open while the half-mold on the right side of the mold, or rear position in the sense of rotation of the blowing machine, opens after the front half-mold by rotating in opposite sense to each other on the same cam track and thus reaching the same maximum symmetrical opening angle in asynchronous mode. Such a kinematic particularity allows the unloading process of the finished container and the loading process of the preform to be optimized. The movement of the two half-molds is conveniently coordinated with the mechanical movement for opening and closing the mold bottom.

The particular shape of the mold of the invention improves the dynamics thereof, in fact it is worth noting how the choice to move the two half-molds separately by means of two separate rotation axes generates a halving of the loads, of the forces in play on the rotational means and of the contact pressures between cam followers and cams, unlike traditional systems which provide a single actuation for the two half-molds.

Preferably, when the first half-mold and the second half-mold are in a closed position, the at least one first connecting rod toggles with the at least one first crank, that is connecting rod and crank are aligned with each other, and the at least one second connecting rod toggles with the at least one third crank. With the special kinematic movement of the invention, a natural deceleration of the masses of the two half-molds in closing step is advantageously generated due to the toggle effect generated between first connecting rod and first crank and between second connecting rod and third crank. This effect generates a significant benefit in the balance of the forces in play during the rotation of the blowing machine, which are significantly reduced with respect to a mold which is not naturally decelerated. Furthermore, given the increased closing force given by the toggle configuration, it is advantageously possible to prevent the use of one or more pins to keep the half-molds closed, or in any case the use is possible of less performing, and therefore less costly, pins. Such an advantage is even more apparent when a continuous cam track is provided, that is which defines a closed path, whereby the cam followers are always guided by the cam track while always remaining on the path, also when the cam followers are not on the stretch designed for opening and closing, thus generating a particularly effective closing.

When in addition to the two side half-molds, the blowing mold also provides the mold bottom, the kinematic motion for opening and closing the mold provides for the mold bottom to be adapted to cyclically move along a direction parallel to the hinge axis A in synchronized manner with the opening and the closing of the two half-molds. For example, there is provided a second cam track where a cam follower constrained to the mold bottom slides. Preferably, the first and the second cam track are concentric to each other. Even more preferably, the first and the second cam track are integral with each other, in the sense that they are obtained in the same piece, for example but not exclusively discoidal.

Further particular embodiments of the invention are apparent from the features of the dependent claims.

### DESCRIPTION OF THE DRAWINGS

For an increased comprehension of the aspects of the present invention, reference will be made to the accompanying drawings, by mere way of non-limiting example, in which:

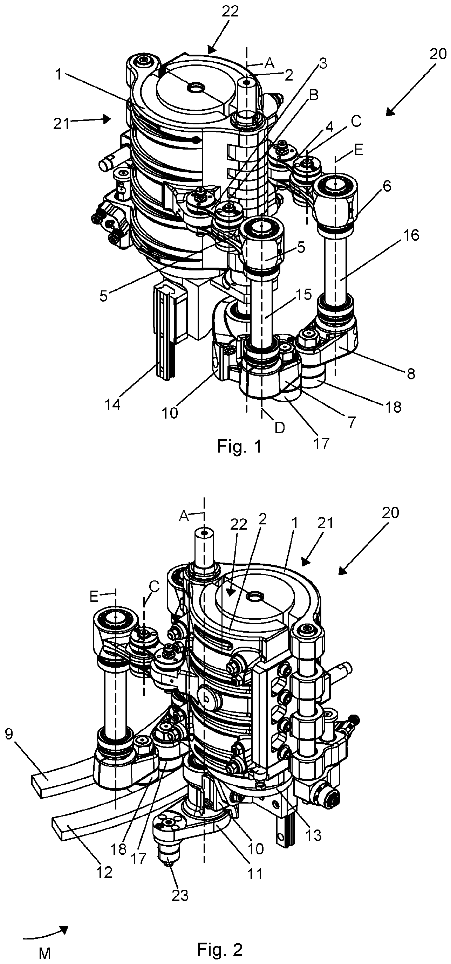

Fig. 1 depicts an axonometric view of a blowing mold according to the invention, from a first side;
Fig. 2 depicts an axonometric view of the blowing mold in Fig. 1, from a different side;
Fig. 3 depicts a plan view of the mold in Fig. 1, in the closed position;
Fig. 4 depicts a plan view of the mold in Fig. 1, in the maximum open position;
Fig. 5 depicts a side view of the mold in Fig. 1, in the closed position;
Fig. 6 depicts a side view of the mold in Fig. 1, in the maximum open position;
Fig. 7 diagrammatically depicts the plan view of part of a blowing machine of containers in which a mold of the invention is inserted and illustrated in certain different operating positions;
Fig. 8 depicts the plan view of an enlarged detail of the blowing machine in Fig. 7;
Fig. 9 depicts certain graphs relative to values taken on by angles and positions of parts forming the mold of the invention as a function of the position of the mold during the course of rotation of the blowing machine on which it is fixed;

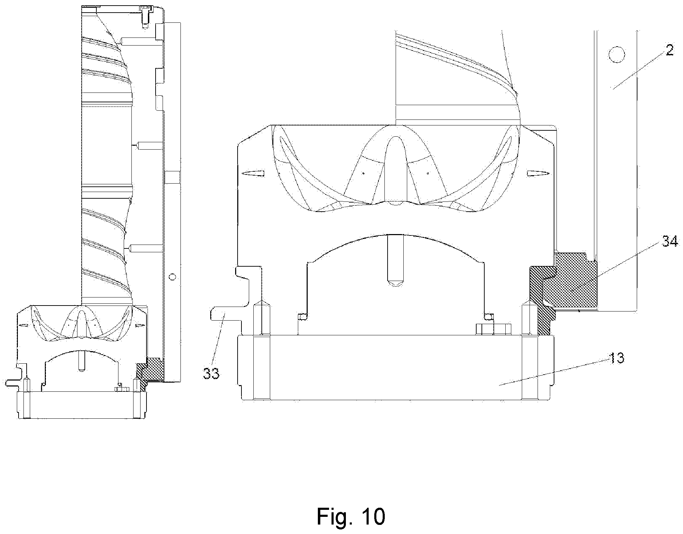

Fig. 10 depicts an axial cross section of an enlarged detail of the mold of the invention;
Fig. 11 depicts an axonometric view of a variant of the mold of the invention;
Fig. 12 depicts a plan view of the mold in Fig. 11, in a first operating position;
Fig. 13 depicts a plan view of the mold in Fig. 11, in a second operating position.

### DETAILED DESCRIPTION OF PREFERRED EMBODIMENTS OF THE INVENTION

With particular reference to the drawings, the mold 20 of the present invention comprises the front 21 and rear 22 half-molds hinged along axis A arranged perpendicular to the radial direction of the blowing machine, and parallel to the rotation axis Z of the blowing machine. The two half-molds 21 and 22 each comprise a respective outer mold carrier 1, 2, and inside each mold carrier 1 and 2 there is a shell mold support and a half-shell mold or half-figure. By closing, the two half-shell molds form the mold of the finished container, as is known by those skilled in the art. The use of the half-shell molds allows the mold carriers 1 and 2 to be kept, in order to produce containers of different shapes and sizes by only changing the half-shell molds.

In a variant of the mold of the invention, it is possible to provide for the shell mold supports and the half-shell molds to be made in a single shell mold block whereby the mold is called mono block. In this case the shape is changed by replacing the shell mold block, while keeping the mold carriers.

In this description, the two side molds are defined as half-molds, both in the case of a mold formed globally by three parts defining the shape of the container, and in the case of a mold formed only by two parts, without the mold bottom.

Each mold carrier 1, 2 is provided with a respective connection portion 43, 44, for example a plate or a fin, in which a through hole is obtained. The two mold carriers 1, 2, and with them the two half-molds 21 and 22, can open and close cyclically by pivoting around the hinge axis A due to a kinematic actuation motion of the cyclical closing and opening movement of mold 20. On one side of the symmetry plane S of mold 20, the kinematic motion controlling the cyclical closing and opening movement of the half-mold 21 comprises (Figures from 1 to 6) a connecting rod 3, hinged at a first end thereof to the connection portion 43 and, at a second end thereof, hinged to the upper crank 5 which is integrally fixed to an upper end of shaft 15, the latter being capable of pivoting around the respective axis D parallel to the hinge axis A. At a lower end of shaft 15, there is integrally fixed an end of a lower crank 7 which carries, on the other end thereof, a cam follower 17 which follows a cam track 9. Alternatively, there can be provided a pair of connecting rods 3, of which each connecting rod is arranged above and below, respectively, the connection portion 43 and crank 5. Similarly, on the other side of the symmetry plane S of mold 20, there are arranged elements equal to the elements described above and arranged as shown in the drawings, so as to control the closing and opening movement of the half-mold 22, in which the connecting rod 4 and crank 6 are perfectly equal to the corresponding connecting rod 3 and crank 5, so as to ensure a perfectly symmetrical opening and closing of the two half-molds 21 and 22. Preferably, also the lower crank 7 is equal to the lower crank 8. The cam follower 18 with which an end of the lower crank 8 is provided, follows the same cam track 9 which follows the cam follower 17. Shaft 16, to which ends the upper crank 6 and the lower crank 8 are integrally fixed, is capable of pivoting around the hinge axis E, it also being parallel to the hinge axis A. The two hinge axes D and E are arranged in fixed position with respect to the hinge axis A. The hinge axes B and C, which are the rotation axis of connecting rod 3 and crank 5 and of connecting rod 4 and crank 6, respectively, are symmetrically positioned with respect to the radial line of the blowing machine passing through the hinge axis A and lying along the symmetry plane S of mold 20.

With their pivoting, the shafts 15 and 16 relative to the axes D and E actuate the mechanism for opening and closing each of the two half-molds 21 and 22 by transferring the movement transmitted thereto by the respective crank 7 and 8 by following the common cam track 9, or simply cam 9, with the cam follower 17 and 18. When the blowing mold is also provided with the mold bottom 13, in addition to the two side half-molds 21 and22, as in the embodiment shown in the drawings, the kinematic motion for opening and closing mold 20 provides for the mold bottom 13 to be adapted to cyclically move along a direction parallel to the hinge axis A in synchronized manner with the opening and closing of the two half-molds 21, 22. For example, as in the embodiment shown, the kinematic opening and closing motion comprises a flange 10 integral with the hinge axis A. By way of example, flange 10 is integral with a shaft which is coaxial to the hinge axis A. On flange 10, there is a cam track 24 which controls the cam follower 25, which is integral to base 26 of the mold bottom 13, and which is moved by a crank 11 which supports a cam follower 23 at the end thereof. The cam follower 23 follows the cam track 12 thereby causing crank 11 to oscillate, which in turn causes flange 10 to oscillate, which acts as drum cam and pushes the cam follower 25 to follow the cam track 24. The cam follower 25 thereby converts the oscillating movement of flange 10 into a movement for lifting and lowering the mold bottom 13. Preferably, the cam track 12 and the cam track 9 are substantially concentric to each other. Even more preferably, the cam track 12 is integral with the cam track 9, for example being obtained in a single piece.

As already explained, the cranks 5 and 6, which actuate the movement of the half-molds 21 in 22 and which are controlled by the rotary-translation of the cam followers 17 and 18 fixed to the cranks 7 and 8, are actuated in dependent manner by the shape of the cam track 9. When the cam follower 17 relative to the front half-mold 21 is the first to reach the stretch of the cam designed to determine the opening of the mold, the part of the cycle begins for unloading the finished container and loading the preform to be blown in the subsequent cycle. Given the nature of its construction arrangement, the cam follower 18 associated with the rear half-mold 22 follows the motion of the cam follower 17 associated with the front half-mold 21 with a delay defined by the relative distance between the axes D and E, and causes the rear half-mold 22 thereof to perform the same opening trajectory performed by the front half-mold 21 with said delay.

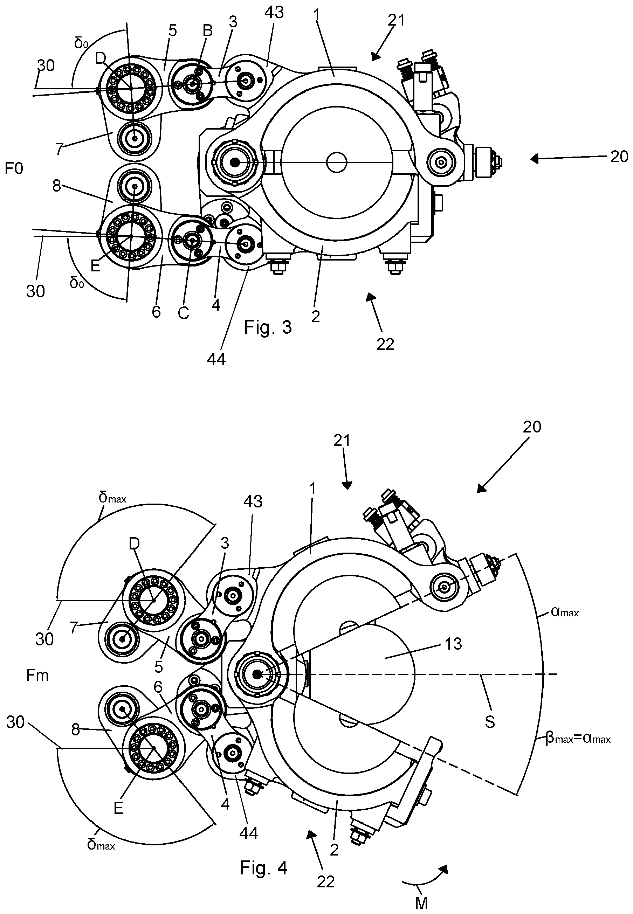

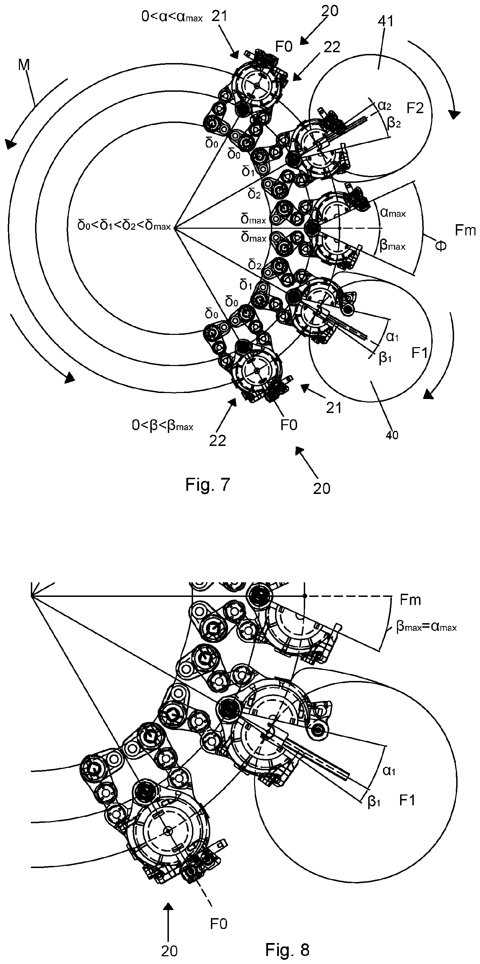

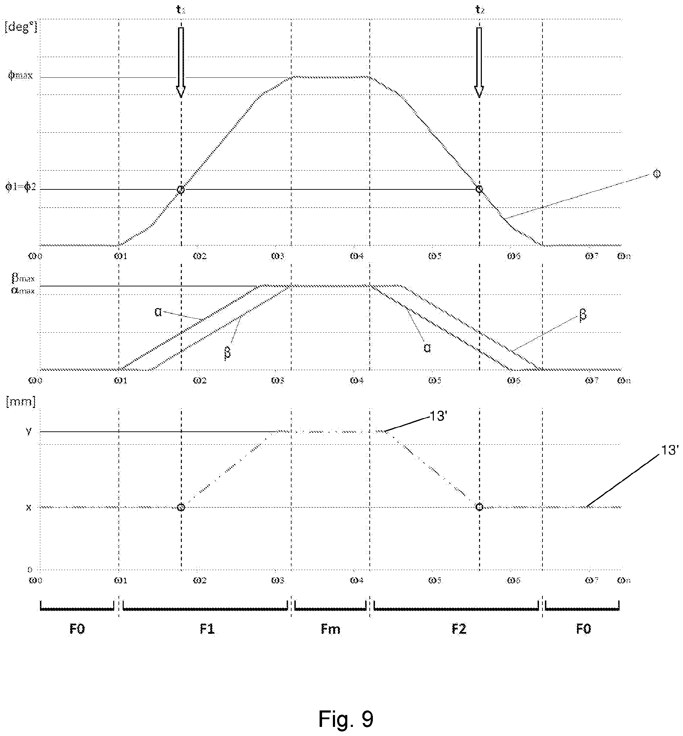

The process for opening and closing mold 20 with extraction of the blown container and insertion of the preform is depicted in Figures 7 and 8, and is described in greater detail below in the different subsequent steps thereof. In the circular motion thereof, the sense of which is indicated with arrow M, the blowing machine on which is fixed the blowing mold 20 enclosing the blown container in the final shape thereof, nears the area where the container is to be extracted from the mold by means of the unloading wheel 40. This angular position of mold 20 with the closed half-molds and the mold bottom 13 positioned high, is indicated conventionally by ω0 in the graph in Figure 9, and in this position both the cranks 7 and 8 are rotated with respect to the relative horizontal 30, which is parallel to the symmetry plane S, by an angle δ0, as shown in Figure 3. Such a position represents a condition of balance for the kinematic motion: the connecting rod 3 and crank 5 toggle, that is the longitudinal axes thereof are aligned with each other, and the connecting rod 4 and crank 6 toggle. This is then followed by an asynchronous opening step of the molds indicated with "F1", corresponding to angle ω1 in the graph in Figure 9, comprising a non simultaneous rotation of the two cranks 7 and 8 by an angle δ, where δ has a variable amplitude in the range δ0≤δ≤δmax with δ increasing. Specifically, step F1 starts the instant in which the cam follower 17 of crank 7, which moves the front half-mold 21, starts traveling along the stretch of cam track 9 provided to control the opening of the half-molds 21 and 22. The half-mold 21 will therefore have an increasing opening α>0. In that instant, crank 8 is not yet affected by the movement since with respect to crank 7, is at a spatial distance defined by the axes D and E and by the lengths of the stretches of cranks 7 and 8 comprised between the axis of the respective cam follower 17, 18 and the axis of the respective shaft 15 and 16. Therefore, the half-mold 22 has an opening angle value equal to β=0. As the rotary motion of the blowing machine advances, also the cam follower 18 relative to crank 8 starts to travel along the stretch of cam track 9 designed for opening the half-molds 21 and 22. Such a step is therefore defined by the rotation of the half-molds 21 and 22 by an angle α where 0<α≤αmax for the front half-mold 21, and with an angle β where 0≤β<βmax for the rear half-mold 22, respectively, where the relation α>β is always valid in this step. In particular, a specific instant t1 is defined in the range described above, in which the rear half-mold 22 is open with angle β=β1 so that β1 represents an adequate amplitude to allow a detachment without interference between the safety half-ring nuts 34 and the constraining ring 33 of the mold bottom. In this position, the front half-mold 21 is open by an angle α=α1 where α1 is greater than β1, corresponding to an angular configuration sufficient to release the half-ring nuts 34, thus permitting the mold bottom 13 to start the lowering thereof. The trend of the height of the mold bottom 13 is indicated by the curve 13' in Fig. 9.

This is followed by a step of maximum symmetrical opening of the half-molds 21 and 22 called "Fm", which corresponds to the position in which both the cranks 7 and 8 are rotated by an angle 5max, as shown in Figure 4. Such a configuration coincides with the maximum opening of both the half-molds 21 and 22 by an angle α=αmax and β=βmax, respectively, where βmax=αmax, which is symmetrical with respect to the symmetry plane S of mold 20, again as shown in Figure 4. The length of the stretch of circumference of the blowing machine in which mold 20 keeps this configuration can be more or less extended, between a zero value and a predetermined design value. Finally, there is an asynchronous and asymmetrical closing step of the half-molds indicated with "F2", which, as for the opening condition, is characterized by a non contemporary oscillation of the two cranks 7 and 8 by an angle δ in inverse sense to the one required for opening, in which δ has a variable amplitude in the range δ0≤δ≤δmax with δ decreasing. Accordingly, the two half-molds 21 and 22 rotate, thus closing by an angle α where 0<α≤αmax for the front half-mold 21, and with an angle β where 0≤β<βmax for the rear half-mold 22, respectively, where the relation α<β is always valid in this closing step. In particular, in this step there is also defined a specific instant t2 in the range described above, in which the left half-mold 21 is open where angle α=α2 so that α2 represents a limit amplitude, adequate to allow the positioning during the closing of the mold bottom 13 with respect to the position of the half-ring nuts 34 in the absence of interference with ring 33. In this condition, the rear half-mold 22 is opened by an angle β=β2 where β2 is certainly greater than α2. Such an angular configuration of the half-molds 21 and 22 therefore represents the minimum limit lifting condition of the support of the mold bottom 13 to allow the proper closing of the ring nuts on the mold bottom. Due to the symmetry of the two molding half-figures and of the mold, it is worth noting how the angles β1 and α2 have the same amplitude. Therefore, β1=α2 given that this condition corresponds in both cases to an angle amplitude of crank 5 or 6 equal to δ=δ1.

In this step, the preform to be blown in the cycle about to start again, is inserted. As the rotary motion of the blowing machine advances, the angles α and β reduce the amplitudes thereof up to the instant in which the angle relative to the right half-mold β also reaches amplitude null, β=0. The mold therefore closes like it was in configuration F0, as both the half-molds 21 and 22 are closed and the cranks 7 and 8 are rotated by an angle δ=δ0.

Such a kinematic motion generates a non synchronous and asymmetrical opening of the two half-molds in the two opening and closing steps before maximum opening is reached. The opening becomes symmetrical as soon as the two cam followers 17 and 18 of the cranks 7 and 8 reach and travel along a continuous stretch of the cam track 9 corresponding to the maximum opening of the mold.

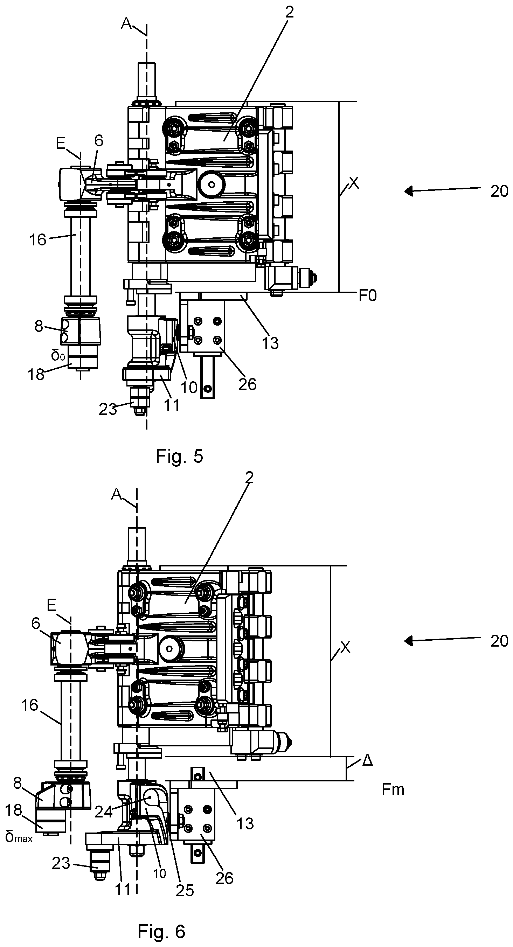

Simultaneously to the cyclical opening and closing movement as a book of the two half-molds 21 the 22 described above, the kinematic motion for mold 20 also controls the translating movement for lifting and lowering the mold bottom 13. Flange 10 rotates around the hinge axis A under the action of the cam track 12 on the cam follower 23 of crank 11 in a manner suitably coordinated with the opening of the half-molds 21 and 22. During the entire step called F0 and as long as the angle β does not reach the minimum angular amplitude β1 during step F1, crank 11 is not moved and the mold bottom 13 is kept in closed position (see Figure 5). As soon as the opening angle β of the rear half-mold 22 reaches the limit amplitude β1, the profile of the cam track 12 in that point changes trajectory, starts moving crank 11 and causes flange 10 to rotate. The cam follower 25, connected to support 26 of the mold bottom 13, starts following the cam track 24 made on flange 10 and is vertically lowered along the path constrained by the vertical guide 14 up to the position of maximum extension. The maximum amplitude reached by the mold bottom 13, defined in Figure 6 as Δ, is selected to allow the proper extraction of the finished container.

Once the container unloading operation is complete, the mold bottom 13 can start climbing from the point of maximum extension Δ towards the closed position, therefore: the cam track or control cam 12 changes its trajectory, flange 10 rotates integrally with crank 11 in opposite sense with respect to the lowering step and the cam follower 25 connected to support 26 of the mold bottom 13, translates vertically upwards. The kinematic motion generated by the cam track 12 should cause the mold bottom to climb totally up to height X shown in Figure 5, before the opening angle α of the front half-mold reaches the limit amplitude α2, to prevent the risk of interference between half-ring nuts 34 and ring 33 in closing step of the two half-molds 21 22. The asymmetrical opening of the two half-molds 21 and 22 up to reaching the maximum symmetrical opening position, achieved by the mechanism with double cam follower 17 and 18, allows an improved extraction of the blown container in the unloading step and an improved insertion of the preform in the loading step. Indeed, as noted above, the asymmetry of the opening and closing movements in the steps called F1 and F2 facilitates the unloading of the finished container by the blowing wheel by means of the unloading wheel 40 and the loading of the preform onto the blowing wheel by means of the loading wheel 41, respectively.

The mold of the invention, with the special kinematic movement described, generates a natural deceleration of the masses of the two half-molds 21 and 22 in the closing step, due to the toggle effect generated between connecting rod 3 and crank 5 and between connecting rod 4 and crank 6. This effect generates a significant benefit in the balance of the forces in play during the rotation of the blowing machine, which are significantly reduced with respect to a mold which is not naturally decelerated. Furthermore, given the increased closing force given by the toggle configuration, it is advantageously possible to prevent the use of one or more pins to keep the half-molds closed, or in any case it is possible to use of less performing, and therefore less costly, pins. Such an advantage is accentuated when a continuous, or closed, cam track 9 is provided, whereby the cam followers 17, 18 are always guided by the cam track 9.

Furthermore, it is worth noting that the cam follower 25 which transmits the motion to the mold bottom 13 always remains in contact with the track of the member generating the movement, flange 10, for the entire evolution of the motion, thus eliminating the need to prepare an element with a returning action. The mold bottom 13 is constrained to the non rotating parts of mold 20 only by means of a guide 14 or by means of any other system of known type which allows ensuring the merely axial movement thereof.

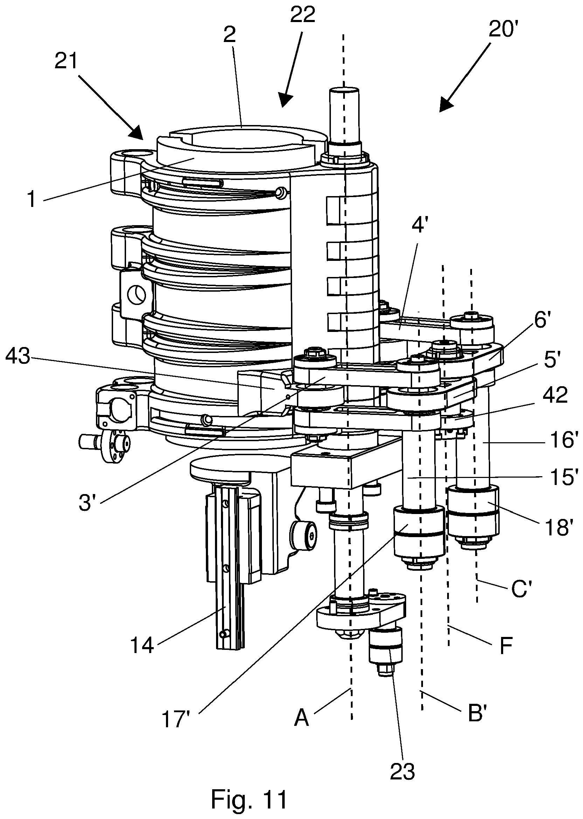

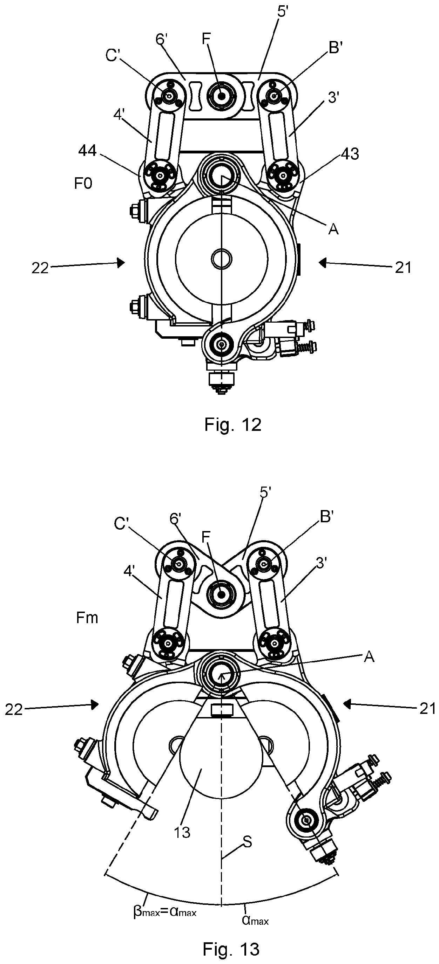

Figures 11, 12 and 13 show another embodiment, with kinematic features similar to the first configuration. This second embodiment causes the two half-molds 21 and 22 to oscillate around the fixed hinge axis A by means of the mutual oscillation of two connecting rod-crank pairs connected to each other by means of a fixing element 42, and having a common fixed rotation axis F, which is the axis of the fixing element 42 and which is parallel to the hinge axis A.

On one side of the symmetry plane S of mold 20, the kinematic motion controlling the cyclical closing and opening movement of the half-mold 21 comprises a connecting rod 3', hinged at a first end thereof to the connection portion 43 and, at a second end thereof, hinged to the crank 5' which is integrally fixed to an upper end of shaft 15'. Shaft 15' is provided with the cam follower 17', preferably at the lower end thereof, and is capable of pivoting around the respective axis B', which is parallel to the hinge axis A. Alternatively, there can be provided a pair of connecting rods 3', of which each connecting rod is arranged above and below the connection portion 43 and crank 5', respectively. Similarly, on the other side of the symmetry plane S of mold 20, there are arranged elements equal to the elements described above and arranged as shown in Figures from 11 to 13, so as to control the closing and opening movement of the half-mold 22, in which the connecting rod 4' and crank 6' are perfectly equal to the corresponding connecting rod 3' and crank 5', so as to ensure a perfectly symmetrical opening and closing of the two half-molds 21 and 22. Shaft 16' is preferably provided, at the lower end thereof, with the cam follower 18'. Shaft 16' is fixed to crank 6', preferably at the upper end thereof, and is capable of pivoting around axis C', which is parallel to the hinge axis A. The two hinge axes B' and C' are symmetrically positioned with respect to the radial line of the blowing machine passing through the hinge axis A and lying along the symmetry plane S of mold 20.

Similarly to the preceding embodiment, this kinematic motion has a movement of the mold bottom which is totally identical to the one described for the first system. Contrarily, with regard to the actuation unit of the half-molds, such an embodiment is formed by two connecting rods 3' and 4' articulated, as the connecting rods 3 and 4 of the preceding embodiment, around the two movable rotation axes B' and C', and is formed by two cranks 5', 6' articulated around the axes B' and C' and coupled in rotation to axis F, which is fixed with respect to the hinge axis A. Preferably, axis F is parallel to the symmetry plane S and is comprised in such a plane. The movement of the entire kinematic motion depends on the trajectory of the two separate cam followers 17' and 18' hinged to the respective shafts 15' and 16', and moved by a conveniently designed common cam path (not shown). The axes B' and C' are also the axes of the shafts 15' and 16', respectively. Preferably, the connecting rod 3', crank 5' and crank 7' are equal to the connecting rod 4', crank 6' and crank 8', respectively.

Such a continuous system allows a maximum symmetrical opening of the two half-molds in non synchronous manner while maintaining the advantages listed above.

The mold according to the invention can also be made with the only two side half-molds, should the shape of the bottom of the container be convex-shaped, for example semi-spherical, such as not to require a mold bottom to consider the undercut originating from the complex shapes of the bottom of the containers.

## Claims

1. A rotary blowing machine for thermoplastic material containers, adapted to rotate about a rotation axis (Z), comprising a plurality of blowing molds (20), each having a first half-mold (21) defined front half mold in the sense of rotation of the blowing machine, a second half-mold (22), defined rear half-mold in the sense of rotation of the blowing machine, the first half-mold (21) and the second half-mold (22) being closable as a book around a hinge axis (A) lying on a symmetry plane (S) of the mold coinciding with a radial plane passing through the rotation axis (Z), each blowing mold (20) comprising at least one cam track,
an opening and closing mechanism adapted to allow the extraction of blown containers and the insertion of preforms to be blown, having
- a first shaft (15, 15'), pivoting around an axis (D, B') thereof, parallel to the hinge axis (A),
- a second shaft (16, 16'), pivoting around an axis (E, C') thereof, parallel to the hinge axis (A),
- at least one first crank (5) and at least one second crank (7) integrally fixed to the first shaft, the at least one second crank (7) having an end to which a first cam follower (17) is fixed, and at least one third crank (6) and at least one fourth crank (8) integrally fixed to the second shaft, the at least one fourth crank (8, 8') having an end to which a second cam follower (18) is fixed; or at least one first crank (5') integrally fixed to the first shaft (15') and a first cam follower (17') hinged to said first shaft (15'), and at least one second crank (6') integrally fixed to the second shaft (16') and a second cam follower (18') hinged to said second shaft (16');
- at least one first connecting rod (3, 3') hinged at a first end thereof to the first half-mold (21) and constrained with a second end thereof to the first shaft (15, 15'),
- at least a second connecting rod (4, 4') hinged at a first end thereof to the second half-mold (22) and constrained with a second end thereof to the second shaft (16, 16'),
wherein each blowing mold is provided with a single first cam track (9),
and wherein the first cam follower (17, 17') and the second cam follower (18, 18') follow the same first cam track (9), at predetermined distance from each other so as to control the opening and the closing of the first half-mold (21) and of the second half-mold (22) in subsequent times during a same blowing cycle.

2. A blowing machine according to claim 1, wherein when the first half-mold (21) and the second half-mold (22) are in a closed position, the at least one first connecting rod (3) toggles with the at least one first crank (5) and the at least one second connecting rod (4) toggles with the at least one third crank (6).

3. A blowing machine according to any one of the preceding claims, wherein each blowing mold comprises
- a second cam track (12),
- a third cam follower (23) fixed to a fifth crank (11), adapted to follow said second cam track (12),
- a third cam track (24) integral with the hinge axis (A) and fixed to the fifth crank (11),
- a fourth cam follower (25), connected to a mold bottom (13), adapted to follow said third cam track (24).

4. A blowing machine according to claim 3, wherein the third cam track (24) is arranged on a flange (10), integral with the hinge axis (A) and fixed to the fifth crank (11), configured to oscillate in opposite senses and to control a lifting and lowering of the mold bottom (13).

5. A blowing machine according to any one of the preceding claims, wherein the at least one first connecting rod (3, 3') and the at least one second connecting rod (4, 4') have equal length, and the axis (D, B') of the first shaft (15, 15') and the axis (E, C') of the second shaft (16, 16') are symmetrically positioned with respect to the symmetry plane (S) of the mold (20).

6. A blowing machine according to claim 5, wherein the at least one first connecting rod (3) is hinged at the second end thereof to the first crank (5), hinged in turn to the first shaft (15), and the at least one second connecting rod (4) is hinged at the second end thereof to the third crank (6), hinged in turn to the second shaft (16).

7. A blowing machine according to claim 5 or 6, wherein the first shaft (15) and the second shaft (16) are arranged at fixed distance from each other and from the hinge axis (A).

8. A blowing machine according to claim 5, wherein the at least one first connecting rod (3') is hinged at the second end thereof to the first shaft (15'), and the at least one second connecting rod (4') is hinged at the second end thereof to the second shaft (16').

9. A blowing machine according to claim 8, wherein the first shaft (15') and the second shaft (16') are hinged, by the at least one first crank (5') and the at least one second crank (6'), respectively, to a fixing element (42) arranged on the symmetry plane S of the mold (20) at a fixed distance from the hinge axis (A).

10. A cyclic opening and closing method of a blowing mold mounted on a blowing machine according to one of claims from 1 to 9, wherein the first cam follower (17, 17') relative to the first half-mold (21) is the first to reach a stretch of the first cam track (9) which determines the opening of the first half-mold (21), while the second cam follower (18, 18') relative to the second half-mold (22) follows the motion of the first cam follower on the same first cam track (9), and with a delay defined by the relative distance between the first cam follower (17, 17') and the second cam follower (18, 18') makes the second half-mold (22) perform a same opening trajectory followed by the first half-mold (21).

## Patentansprüche

1. Rotationsblasmaschine für Behälter aus thermoplastischem Material, die zum Drehen um eine Drehachse (Z) ausgestaltet ist, aufweisend:
- eine Vielzahl von Blasformen (20), von denen jede eine erste Halbform (21), die als vordere Halbform in Drehrichtung der Blasmaschine definiert ist, und eine zweite Halbform (22) aufweist, die als hintere Halbform in Drehrichtung der Blasmaschine definiert ist, wobei die erste Halbform (21) und die zweite Halbform (22) wie ein Buch um eine Schwenkachse (A) geschlossen werden können, die auf einer Symmetrieebene (S) der Form liegt und mit einer radialen Ebene zusammenfällt, die die Drehachse (Z) schneidet, wobei jede Blasform (20) zumindest ein Nockenprofil aufweist,
- einen Öffnungs- und Schließmechanismus, der geeignet ist, die Entnahme von geblasenen Behältern und das Einsetzen von zu blasenden Vorformen zu ermöglichen, aufweisend:
- eine erste Welle (15, 15'), drehbar um deren zur Schwenkachse (A) parallelen Achse (D, B'),
- eine zweite Welle (16, 16'), drehbar um deren zur Schwenkachse (A) parallelen Achse (E, C'),
- zumindest einen ersten Hebel (5) und zumindest einen zweiten Hebel (7), die integral an der ersten Welle befestigt sind, wobei der zumindest eine zweite Hebel (7) ein Ende aufweist, an dem ein erster Nockenstößel (17) befestigt ist, und zumindest einen dritten Hebel (6) und zumindest einen vierten Hebel (8), die integral an der der zweiten Welle befestigt sind, wobei der zumindest eine vierte Hebel (8, 8') ein Ende aufweist, an dem ein zweiter Nockenstößel (18) befestigt ist; oder
- zumindest einen ersten Hebel (5'), der integral an der ersten Welle (15') befestigt ist, mit einem ersten Nockenstößel (17'), der schwenkbar an der ersten Welle (15') gelagert ist, und zumindest einen zweiten Hebel (6'), der integral an der der zweiten Welle (16') befestigt ist, mit einem zweiten Nockenstößel (18'), der schwenkbar an der zweiten Welle (16') gelagert ist;
- zumindest eine erste Pleuelstange (3, 3'), die mit einem Ende schwenkbar an der ersten Halbform (21) gelagert und mit ihrem zweiten Ende an der ersten Welle (15, 15') gehalten ist,
- zumindest eine zweite Pleuelstange (4, 4'), die mit einem Ende drehbar schwenkbar an der zweiten Halbform (22) gelagert und mit ihrem zweiten Ende an der zweiten Welle (16, 16') gehalten ist,
wobei jede Blasform mit einem einzelnen ersten Nockenprofil (9) versehen ist, und der erste Nockenstößel (17,17') und der zweite Nockenstößel (18,18') demselben ersten Nockenprofil (9) mit vorgegebenem Abstand zueinander derart folgen, dass das Öffnen und das Schließen der ersten Halbform (21) und der zweiten Halbform (22) nacheinander während einem Blaszyklus gesteuert wird.

2. Blasmaschine gemäß Anspruch 1, wobei wenn sich die erste Halbform (21) und die zweite Halbform (22) in geschlossener Position befinden, die zumindest eine erste Pleuelstange (3) den zumindest einen ersten Hebel (5) betätigt und die zumindest eine zweite Pleuelstange (4) den zumindest einen dritten Hebel (6) betätigt.

3. Blasmaschine gemäß einem der vorigen Ansprüche, wobei jede Blasform aufweist:
- ein zweites Nockenprofil (12),
- einen dritten Nockenstößel (23), der an einem fünften Hebel (11) befestigt und geeignet ist, dem zweiten Nockenprofil (12) zu folgen,
- ein drittes mit der Schwenkachse (A) integrales Nockenprofil (24), das an dem fünften Hebel (11) befestigt ist,
- einen vierten Nockenstößel (25), der mit einem Formboden (13) verbunden und ausgestaltet ist, dem dritten Nockenprofil (24) zu folgen.

4. Blasmaschine gemäß Anspruch 3, wobei das dritte Nockenprofil (24) auf einem Flansch (10) angeordnet ist, der integral mit der Schwenkachse (A) und an dem fünften Hebel (11) befestigt ist und derart ausgestaltet ist, dass er sich in entgegengesetzte Richtungen bewegen und ein Heben und Senken des Formbodens (13) steuern kann.

5. Blasmaschine gemäß einem der vorigen Ansprüche, wobei die zumindest eine erste Pleuelstange (3, 3') und die zumindest eine zweite Pleuelstange (4, 4') gleich lang sind, und die Achse (D, B') der ersten Welle (15, 15') und die Achse (E, C') der zweiten Welle (16, 16') bezüglich der Symmetrieebene (S) der Form (20) symmetrisch angeordnet sind.

6. Blasmaschine gemäß Anspruch 5, wobei die zumindest eine erste Pleuelstange (3) an ihrem zweiten Ende schwenkbar mit dem ersten Hebel (5) verbunden ist, der wiederum drehbar mit der ersten Welle (15) verbunden ist, und die zumindest eine zweite Pleuelstange (4) an ihrem zweiten Ende drehbar mit dem dritten Hebel (6) verbunden ist, der wiederum schwenkbar mit der zweiten Welle (16) verbunden ist.

7. Blasmaschine gemäß Anspruch 5 oder 6, wobei die erste Welle (15) und die zweite Welle (16) in festem Abstand zueinander und zur Schwenkachse (A) angeordnet sind.

8. Blasmaschine gemäß Anspruch 5, wobei die zumindest eine erste Pleuelstange (3') an ihrem zweiten Ende schwenkbar mit der ersten Welle (15') verbunden ist und die zumindest eine zweite Pleuelstange (4') an ihrem zweiten Ende schwenkbar mit der zweiten Welle (16') verbunden ist.

9. Blasmaschine gemäß Anspruch 8, wobei die erste Welle (15') und die zweite Welle (16') durch den zumindest einen ersten Hebel (5') bzw. den zumindest einen zweiten Hebel (6') schwenkbar mit einem Fixierelement (42) verbunden sind, das auf der Symmetrieebene S der Form (20) mit festem Abstand zur Schwenkachse (A) angeordnet ist.

10. Zyklisches Verfahren zum Öffnen und Schließen einer an einer Blasmaschine montierten Blasform gemäß einem der Ansprüche 1 bis 9, wobei der erste zur ersten Halbform (21) gehörige Nockenstößel (17, 17'), als erster eine Strecke des ersten Nockenprofils (9) erreicht, das die Öffnung der ersten Halbform (21) bestimmt, während der zweite zur zweiten Halbform (22) gehörige Nockenstößel (18, 18'), der Bewegung des ersten Nockenstößels auf demselben ersten Nockenprofil (9) folgt und mit einer Verzögerung, die durch den Abstand zwischen dem ersten Nockenstößel (17, 17') und dem zweiten Nockenstößel (18, 18') zueinander bestimmt wird, die zweite Halbform (22) dieselbe Öffnungskurve ausführen lässt, gefolgt von der ersten Halbform (21).

## Revendications

1. Une machine de soufflage rotative pour contenants en matériau thermoplastique, conçue pour tourner autour d'un axe de rotation (Z), comprenant une pluralité de moules de soufflage (20), ayant chacun un premier demi-moule (21) défini en demi-moule avant dans le sens de rotation de la machine de soufflage, un deuxième demi-moule (22), défini demi-moule arrière dans le sens de rotation de la machine de soufflage, le premier demi-moule (21) et le deuxième demi-moule (22) pouvant être fermés comme un livre autour d'un axe charnière (A) situé sur un plan de symétrie (S) du moule coïncidant avec un plan radial passant par l'axe de rotation (Z), chaque moule de soufflage (20) comprenant au moins une piste de came,
un mécanisme d'ouverture et de fermeture conçu pour permettre l'extraction de contenants soufflés et l'insertion de préformes à souffler, ayant
- un premier arbre (15, 15'), pivotant autour d'un axe (D, B') de celui-ci, parallèle à l'axe charnière (A),
- un deuxième arbre (16, 16'), pivotant autour d'un axe (E, C') de celui-ci, parallèle à l'axe charnière (A),
- au moins une première manivelle (5) et au moins une deuxième manivelle (7) solidaires du premier arbre, l'au moins une deuxième manivelle (7) ayant une extrémité à laquelle un premier galet suiveur (17) est fixé, et au moins une troisième manivelle (6) et au moins une quatrième manivelle (8) solidaires du deuxième arbre, l'au moins une quatrième manivelle (8, 8') ayant une extrémité à laquelle un deuxième galet suiveur (18) est fixé ; ou au moins une première manivelle (5') solidaire du premier arbre (15') et un premier galet suiveur (17') articulé sur ledit premier arbre (15'), et au moins une deuxième manivelle (6') solidaire du deuxième arbre (16') et un deuxième galet suiveur (18') articulé sur ledit deuxième arbre (16') ;
- au moins une première bielle de raccordement (3, 3') articulée au niveau d'une première extrémité de celle-ci sur le premier demi-moule (21) et contrainte par une deuxième extrémité de celle-ci sur le premier arbre (15, 15'),
- au moins une deuxième bielle de raccordement (4, 4') articulée au niveau d'une première extrémité de celle-ci sur le deuxième demi-moule (22) et contrainte par une deuxième extrémité de celle-ci sur le deuxième arbre (16, 16'),
dans laquelle chaque moule de soufflage est pourvu d'une seule première piste de came (9),
et dans laquelle le premier galet suiveur (17, 17') et le deuxième galet suiveur (18, 18') suivent la même première piste de came (9), à une distance prédéterminée l'un de l'autre de façon à commander l'ouverture et la fermeture du premier demi-moule (21) et du deuxième demi-moule (22) dans des temps ultérieurs pendant un même cycle de soufflage.

2. Une machine de soufflage selon la revendication 1, dans laquelle lorsque le premier demi-moule (21) et le deuxième demi-moule (22) sont dans une position fermée, l'au moins une première bielle de raccordement (3) bascule avec l'au moins une première manivelle (5) et l'au moins une deuxième bielle de raccordement (4) bascule avec l'au moins une troisième manivelle (6).

3. Une machine de soufflage selon l'une quelconque des revendications précédentes, dans laquelle chaque moule de soufflage comprend
- une deuxième piste de came (12),
- un troisième galet suiveur (23) fixé à une cinquième manivelle (11), conçu pour suivre ladite deuxième piste de came (12),
- une troisième piste de came (24) solidaire de l'axe charnière (A) et fixée à la cinquième manivelle (11),
- un quatrième galet suiveur (25), raccordé à un fond de moule (13), conçu pour suivre ladite troisième piste de came (24).

4. Une machine de soufflage selon la revendication 3, dans laquelle la troisième piste de came (24) est agencée sur une bride (10), solidaire de l'axe charnière (A) et fixée à la cinquième manivelle (11), configurée pour osciller dans des sens opposés et pour commander un levage et un abaissement du fond de moule (13).

5. Une machine de soufflage selon l'une quelconque des revendications précédentes, dans laquelle l'au moins une première bielle de raccordement (3, 3') et l'au moins une deuxième bielle de raccordement (4, 4') ont une longueur égale, et l'axe (D, B') du premier arbre (15, 15') et l'axe (E, C') du deuxième arbre (16, 16') sont positionnés symétriquement par rapport au plan de symétrie (S) du moule (20).

6. Une machine de soufflage selon la revendication 5, dans laquelle l'au moins une première bielle de raccordement (3) est articulée au niveau de la deuxième extrémité de celle-ci sur la première manivelle (5), articulée à son tour sur le premier arbre (15), et ladite au moins une deuxième bielle de raccordement (4) est articulée au niveau de la deuxième extrémité de celle-ci sur la troisième manivelle (6), articulée à son tour sur le deuxième arbre (16).

7. Une machine de soufflage selon la revendication 5 ou la revendication 6, dans laquelle le premier arbre (15) et le deuxième arbre (16) sont agencés à une distance fixe l'un de l'autre et de l'axe charnière (A).

8. Une machine de soufflage selon la revendication 5, dans laquelle l'au moins une première bielle de raccordement (3') est articulée au niveau de la deuxième extrémité de celle-ci sur le premier arbre (15'), et ladite au moins une deuxième bielle de raccordement (4') est articulée au niveau de la deuxième extrémité de celle-ci sur le deuxième arbre (16').

9. Une machine de soufflage selon la revendication 8, dans laquelle le premier arbre (15') et le deuxième arbre (16') sont articulés, par l'au moins une première manivelle (5') et l'au moins une deuxième manivelle (6'), respectivement, sur un élément de fixation (42) agencé sur le plan de symétrie S du moule (20) à une distance fixe de l'axe charnière (A).

10. Un procédé d'ouverture et de fermeture cycliques d'un moule de soufflage monté sur une machine de soufflage selon l'une des revendications 1 à 9, dans lequel le premier galet suiveur (17, 17') relativement au premier demi-moule (21) est le premier à atteindre une extension de la première piste de came (9) qui détermine l'ouverture du premier demi-moule (21), tandis que le deuxième galet suiveur (18, 18') relativement au deuxième demi-moule (22) suit le mouvement du premier galet suiveur sur la même première piste de came (9), et avec un retard défini par la distance relative entre le premier galet suiveur (17, 17') et le deuxième galet suiveur (18, 18') amène le deuxième demi-moule (22) à réaliser une même trajectoire d'ouverture suivie par le premier demi-moule (21).
